# EUROPEAN PATENT APPLICATION

(11) **EP 1 035 479 A2**
(43) Date of publication of application: **13.09.2000**
(21) Application number: 00102283.9
(22) Date of filing: 17.02.2000
(51) Int. Cl.: G06F 15/78, G06F 9/30

(54) **System for processing vector data**

(30) Priority: 12.03.1999 JP 6602599
(71) Applicant: Hitachi, Ltd., Chiyoda-ku, Tokyo 101-8010 (JP)
(72) Inventor: Morita, Yuichiro, Hitachi-shi, Ibaraki 316-0014 (JP); Fujita, Ryo, Hitachi-shi, Ibaraki 316-0025 (JP); Kamada, Eiki, Isehara-shi, Kanagawa 259-1105 (JP)
(74) Representative: Beetz & Partner Patentanwälte

(57) **Abstract**

A data processing system capable of efficient, high-speed data processing. The system comprises: a register (20) having fields (200, VE(i,j)) for accommodating a plurality of data elements and regions (220, W(i,j)) each holding information indicating whether a data element has been written to the corresponding field; an operation part (10) for operating on data in accordance with operation instructions; and a controlling part for reading from the register the data to be operated on and for sending the read data to the operation part in accordance with an operation instruction and with the information held in the register.

## Description

### FIELD OF THE INVENTION

The present invention relates to a vector processor and a vector processing system for processing vector data that are one-dimensionally sequenced.

### BACKGROUND OF THE INVENTION

A large number of scientific and technical computation processes consist mostly of what is known as vector processing, i.e., execution of the same arithmetic operation on each of a series of elements making up vector data. Supercomputers designed to address such scientific and technical computations have a vector processor that executes vector processing at high speed on a pipeline basis using dedicated hardware facilities. Vector processors are basically structured to comprise: a vector register for accommodating a plurality of elements constituting vector data; a vector loading function for successively loading a series of vector data elements from memory into the vector register in response to a vector load instruction; a vector storing function for successively storing a series of vector data elements from the vector register into memory in response to a vector store instruction; and a vector computing function for executing the same arithmetic operation on each of a series of vector data elements in the vector register in response to a vector operation instruction. Using these functions, the vector processor rapidly loads, operates on, and stores vector data on a pipeline basis.

The vector processor further includes what is known as a chaining function that executes two vector operation instructions in parallel, one instruction triggering an operation on the result of another instruction, whereby the speed of vector processing is improved. Chaining signifies that if the result of the operation by a given vector operation instruction serves as data on which the next vector operation instruction operates, then the next instruction is carried out immediately after acquisition of the result of the operation by the current instruction without waiting for completion of the current instruction, whereby operations on the elements of vector data are executed successively. One disadvantage of the chaining function is that because the time to execute the ensuing instruction is determined only after the result of the operation by the current instruction has been obtained, the function can only be utilized where the successive acquisition of the results of the preceding instructions is guaranteed. In other words, the chaining function is not applicable to vector load instructions involving memory access operations in which the data read-out timing is unpredictable.

A new chaining scheme has been proposed which judges the time to execute the next instruction for each of vector data elements for dynamic chaining in order to resolve the bottleneck of the chaining function and boost the speed of vector processing. Dynamic chaining involves using pointers or flags to indicate successively and explicitly up to which vector data element a vector loading action or a vector operation has been completed during execution of a vector load instruction or a vector operation instruction. The pointers or flags are referenced to determine when to execute the next vector operation instruction or vector store instruction for each vector data element in a dynamic execution setup. The scheme is supposed to permit chaining even if load delays occur arbitrarily during execution of a vector load instruction as a result of memory access contention or the like, whereby the speed of vector processing is improved. Apparatuses operating under this scheme are disclosed illustratively by JPA 6-2310945 and JPA 8-202687.

### SUMMARY OF THE INVENTION

It is therefore an object of the present invention to provide a vector data processor and a vector processing system whereby a processing stop time caused by load delays is minimized during dynamic chaining of vector processing instructions so as to increase the speed of vector processing.

The above object may be achieved according to one aspect of the present invention, which provides a data processing system comprising either a data processor and a memory part; or a data processor, a switching part and a memory part. These components of the system offer features outlined below, and the object may be accomplished by implementing any one or a combination of these features.

To carry out high-speed data processing, the data processor employs a register that has areas for accommodating a plurality of data elements, and areas for indicating whether each of the accommodating areas is filled with data. The data processor also includes a data input part that outputs address information for reading data to be set to the register are read in. The address information at least includes memory addresses, identification information for identifying individual data elements, identification information for identifying a data-originating processor, or like information representing these specifics.

The data processor further comprises a controlling part which retrieves from the register those data to be operated on and which sends the retrieved data to an arithmetic operation part in accordance with an operation instruction and with the information held in the register, in order to operate on the desired data loaded in the register.

The data processor further comprises a register that has areas for accommodating a plurality of data elements, and areas for indicating whether the data element in each of the accommodating areas is the result of an operation. Also included in the data processor is a data output part which reads the result of an operation from the register based on information held in the register and which outputs the result together with address information.

A switching part (arbitration part) of the data processor determines when to transfer address information based on memory status and on address information from the processor for efficient access execution between at least one processor and at least one memory. Such access is implemented by transferring the address information in question to a memory to which such a transfer is found feasible.

Also included in the data processor are an address information transfer part and a data transfer part designed for efficient access execution between a plurality of processors on the one hand and a plurality of memories on the other hand. The address information transfer part transfers address information from a processor to a memory, and the data transfer part transfer data from a memory to a processor.

A memory part of the data processor outputs information indicating whether a given memory can accept access information for efficient execution of access to or from any other configured memory. In outputting data, the memory part supplements the data with information included in the access information.

The object above may be achieved according to another aspect of the present invention, which provides a data processing system comprising a data processor and a memory. The data processor outputs return destination information and an address, and the memory outputs data retrieved from the designated address as well as the return destination information, whereby data processing is carried out at high speed.

According to a further aspect of the invention, there is provided a data processing system comprising a switching part which, connected interposingly between at least one memory and at least one processor, determines when to output address information to a memory based on address information from the processor and on a signal from the memory. This feature of the system also helps to improve the efficiency of data processing.

According to an even further aspect of the invention, there is provided a data processing system comprising a plurality of vector processors for executing the same arithmetic operation repeatedly on each of a plurality of data elements constituting vector data, and a processor for selecting one of the vector processors if the instruction to be executed turns out to be a vector processing instruction, the processor further transferring the vector processing instruction to the selected vector processor. The system makes up a distributed processing setup that enhances processing efficiency.

According to a still further aspect of the invention, there is provided a data processing system comprising a plurality of data processors each including a communication part for transferring data between data processors, a memory for storing data, and a processor for computing data read from the memory. The processor outputs return destination information together with an address about the data to be processed. The memory outputs the data retrieved from the address in question together with the return destination information. These components constitute a large-scale data processing system that functions efficiently.

Other objects, features and advantages of the invention will become more apparent upon a reading of the following description and appended drawings.

### BRIEF DESCRIPTION OF THE DRAWINGS

Fig. 1 is a detailed block diagram of a vector register facility and a vector operation unit;
Fig. 2 is a circuit diagram of a read synchronization circuit in the vector operation unit;
Fig. 3 is a block diagram of a vector loading unit;
Fig. 4 is a block diagram of a vector storing unit;
Fig. 5 is a block diagram of a read synchronization circuit in the vector storing unit;
Fig. 6 is a block diagram of a memory module;
Fig. 7 is a block diagram of a switching part;
Fig. 8 is a block diagram of a data processing system in a first structure;
Fig. 9 is a block diagram of a vector register facility and a vector operation unit in a second structure;
Fig. 10 is a block diagram of a vector register facility and a vector operation unit in a third structure;
Fig. 11 is a block diagram of a read synchronization circuit in the vector operation unit in the third structure;
Fig. 12 is a block diagram of a vector register facility and a vector operation unit in a fourth structure;
Fig. 13 is a block diagram of a vector loading unit in a second structure;
Fig. 14 is a block diagram of a data processing system in a second structure;
Fig. 15 is a block diagram of a data processing system in a third structure;
Fig. 16 is a block diagram of a data processing system in a fourth structure;
Fig. 17 is a block diagram showing a group of data processing systems;
Fig. 18 is a timing chart of vector processing performed by a data processing system; and
Fig. 19 is a timing chart of vector processing carried out by a conventional vector processing system.

### DESCRIPTION OF THE PREFERRED EMBODIMENTS

Preferred embodiments of this invention will now be described with reference to the accompanying drawings.

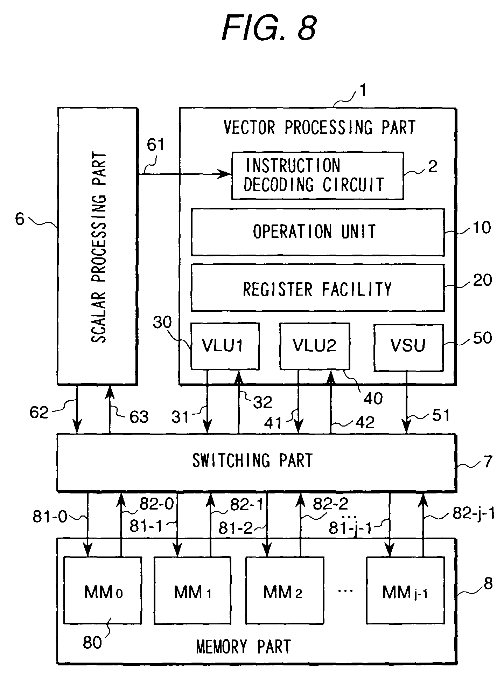

Fig. 8 is a block diagram showing the first structure of a data processing system embodying the invention.

The data processing system comprises: a scalar processing part 6 for decoding program instructions and executing scalar instructions; a vector processing part 1 for carrying out vector processing; a memory part 8 for storing data; and a switching part 7 for connecting the scalar processing part 6 and vector processing part 1 to the memory part 8. For this embodiment, a set of data elements constituting a vector will be described as vector data hereunder. The scalar processing part 6, vector processing part 1, memory part 8 and switching part 7 may be constituted individually by multiple semiconductor integrated circuits, or may be implemented collectively by a single semiconductor integrated circuit. The number of signal lines for transferring data in the single chip setup is allowed to be greater than in the multiple chip arrangement. Furthermore, the single chip setup eliminates the need for drivers required conventionally for data transfer between chips, so that it constitutes a data processing system operating more efficiently and at higher speeds than the multiple chip arrangement.

If the scalar processing part 6 and vector processing part 1 are made of a single semiconductor integrated circuit, or if the scaler processing part 6, vector processing part 1 and switching part 7 are constituted by a single semiconductor integrated circuit, it is possible to modify the structure of the memory part 8 as desired. That is, with the capacity of the memory part 8 changed as needed, the general versatility of the system is enhanced.

The scalar processing part 6 decodes program instructions. If the decoded instruction turns out to be a scalar instruction, the scalar processing part 6 executes the instruction; if the instruction is found to be a vector instruction, the scalar processing part 6 transmits the vector instruction 61 to the vector processing part 1.

The vector processing part 1 comprises: an instruction decoding circuit 2 for decoding the vector instruction 61 coming from the scalar processing part 6; an operation unit 10 for repeating the same operation on each of a series of vector data elements; a register facility 20 made of a plurality of registers for temporarily accommodating vector data to be fed to the operation unit 10, as well as the results of operations performed by the operation unit 10; vector loading units VLU1 (30) and VLU2 (40) for retrieving vector data from the memory part 8 and for writing the data to registers in the register facility 20; and a vector storing unit VSU (50) which retrieves vector data from registers in the register facility 20 and writes the data to the memory part 8.

Upon receipt of the vector instruction 61 from the scalar processing part 6, the instruction decoding circuit 2 orders the operation unit 10, register facility 20, vector loading units VLU1 (30) and VLU2 (40), and vector storing unit VSU (50) to execute the instruction by decoding its instruction code and operands.

On receiving a command to execute a vector operation instruction from the instruction decoding circuit 2, the operation unit 10 reads vector data elements from a register or registers in the register facility 20 which are designated by an operand of the vector operation instruction. The operation unit 10 performs the operation on each of the vector data elements in pipeline fashion as designated by the instruction code of the vector operation instruction, and writes results of the operations to those registers in the register facility 20 which are designated by an operand of the vector operation instruction.

The register facility 20 has a plurality of registers each capable of holding vector data made of up to "n" elements. The registers are used temporarily to accommodate vector data to be operated on as well as vector data resulting from operations.

On receiving a command to execute a load instruction from the instruction decoding circuit 2, the vector loading units VLU1 (30) and VLU2 (40) read vector data from those areas in the memory part 8 which are designated by operands of the load instruction, and write the data to those register in the register facility 20 which are specified by operands of the load instruction. The load operation involves transmitting to the memory part 8 a vector data read request for each of data elements separately, and writing the retrieved data elements to the registers in the register facility 20. The operation is repeated on all vector data elements involved. This embodiment is capable of having two vector load instructions executed simultaneously by the two vector loading units VLU1 (30) and VLU2 (40). Alternatively, the number of vector loading units may be increased so as to execute a larger number of vector load instructions concurrently. As another alternative, only one vector loading unit may be provided to execute one vector load instruction at a time on a reduced circuit scale.

Upon receipt of a command to execute a vector store instruction from the instruction decoding circuit 2, the vector storing unit VSU (50) reads vector data from that register in the register facility 20 which is designated by an operand of the vector store instruction, and writes the data back to that area in the memory part 8 which is specified by an operand of the vector store instruction. The vector store operation by the storing unit involves transmitting to the memory part 8 a vector data write request for each of data elements separately, and writing the retrieved data elements to the memory part 8. This embodiment is capable of having one vector store instruction executed at a time by the vector storing unit VSU (50). Alternatively, the number of vector storing units may be increased so as to execute a plurality of vector store instructions simultaneously.

The memory part 8 uses a plurality of memory modules (MM0, MM1, ..., MMJ-1) 80 to implement an interleaving setup. Each memory module receives independently a write request and a read request for memory access. This means that even as a memory module is being accessed, another memory module is available for access thereto.

The switching part 7 establishes paths of access ranging from the scalar processing part 6 as well as from the vector loading units VLU1 (30), VLU2 (40) and VSU (50) of the vector processing part 1 to each of the memory modules 80 in the memory part 8. Specifically, the switching part 7 forwards memory access requests 62, 31, 41 and 51 coming from the scalar processing part 6 as well as from the VLU1 (30), VLU2 (40) and VSU (50) in the vector processing part 1 to the memory modules 80 (81-0, 81-1, 81-2, ..., 81-j-1) of an access destination, and sends read data 82-0, 82-1, 82-2, ..., 82-j-1 from the memory modules 80 to the access sources, i.e., the scalar processing part 6 as well as the VLU1 (30) and VLU2 (40) in the vector processing part 1 (63, 32, 42).

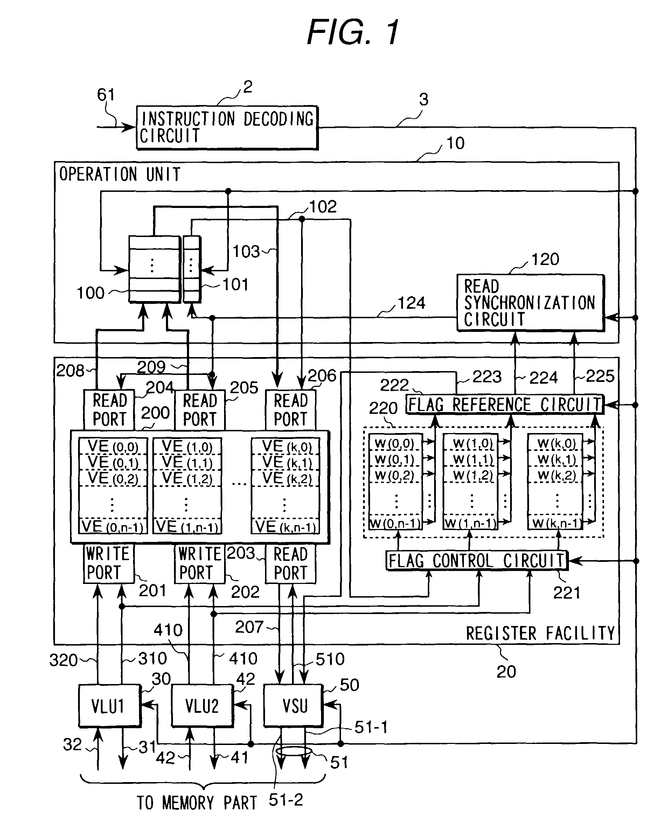

Fig. 1 is a detailed block diagram of the register facility 20 and operation unit 10 according to the invention. The register facility 20 has a register file 200 made of a plurality of registers. Each register is capable of accommodating up to "n" vector data elements. In Fig. 1, the registers are indicated as VE(i, 0), VE(i, 1), VE(i, 2), ..., VE(i, j), ..., VE(i, n-1). The indication VE(i, j) stands for a vector data element, wherein character "i" denotes a register number and "j" represents an element number. Vector data element fields in each register of the register file 200 are each addressed by use of a register number and an element number (which constitute an element address). Each register allows a vector data element to be written independently thereto through three write ports 201, 202 and 206, and permits a vector data element to be read independently therefrom through three read ports 203, 204 and 205.

On receiving a register write command/element address 310 and data 320 from the vector loading unit VLU1 (30), the write port 201 writes the data to the register element field designated by the element address. Likewise, upon receipt of a register write command/element address 410 and data 420 from the vector loading unit VLU2 (40), the write port 202 writes the data to the register element field specified by the element address. Similarly, when receiving a register write command/element address 1020 and data 103 from the operation unit 10, the write port 206 writes the data to the register element field designated by the element address.

Upon receipt of a register read command/element number 124 from the operation unit 10, each of the read ports 204 and 205 reads data from the register element field designated by both the element number and the number of the register (not shown) subject to the operation specified by the instruction decoding circuit 2. The retrieved data 208 and 209 are output to the operation unit 10. When receiving a register read command/element address 510 from the vector storing unit (VSU) 50, the read port 203 reads data from the register element field designated by the element address. The retrieved data 207 are output to the vector storing unit (VSU) 50.

The register facility 20 further comprises write complete flags 220 each indicating that data have been written to the corresponding register element field, a flag control circuit 221 for setting and resetting each of the write complete flags 220, and a flag reference circuit 222 for referencing the set and reset states of each write complete flag 220.

The write complete flags 220 are each a one-bit flag corresponding to each of the element fields in each register. A logical 1 and a logical 0 denote the set and the reset state of a flag, respectively. In Fig. 1, each write complete flag is indicated as W(i, j), where "i" stands for the register number of the register in question and "j" for the element number of the corresponding element.

In accordance with a command signal 3 from the instruction decoding circuit 2, the flag control circuit 221 resets beforehand the write complete flags 220 corresponding to all elements in the register to which vector data are to be written upon execution of a vector instruction. The register may be one into which data are loaded by a data load instruction, or one to which to write results of an operation triggered by an operation instruction. On receiving register write commands/element addresses 102, 310 and 410 from the operation unit 10, vector loading unit VLU1 (30) and vector load unit VLU2 (40) respectively, the flag control circuit 221 sets the write complete flags 220 corresponding to the register element fields designated by the element addresses in question. Specifically, when the operation unit 10, vector loading unit VLU1 (30) and vector load unit VLU2 (40) write data to certain register element fields in the register file 200, the flag control circuit 221 sets the write complete flags 220 corresponding to the register element fields in question.

In keeping with a command signal 3 from the instruction decoding circuit 2, the flag reference circuit 222 continuously supplies the operation unit 10 and vector storing unit (VSU) 50 with values of the write complete flags 220 corresponding to all elements in registers such as a register into which data are stored by a vector store instruction or a register subject to an operation by a vector operation instruction. If the vector instruction to be executed is a vector operation instruction and if a single register is designated by an operand as subject to the operation, then the flag reference circuit 222 supplies the operation unit 10 with write complete flag values 224 of the write complete flags 220 corresponding to all elements in the register of interest. If the vector instruction to be executed is an operation instruction and if two registers are designated by an operand as subject to the operation, then the flag reference circuit 222 supplies the operation unit 10 with write complete flag values 224 and 225 of the write complete flags 220 corresponding to all elements in the two registers. If the vector instruction to be executed is a store instruction, then the flag reference circuit 222 supplies the vector storing unit (VSU) 50 with write complete flag values 223 of the write complete flags 220 corresponding to all elements of the register(s) in question.

The operation unit 10 comprises: an operation pipeline 100 for operating on one or two vector data elements individually on a pipeline basis and for outputting the results as vector data; a read synchronization circuit 120 for controlling the supply of vector data from the register facility 20 to the operation pipeline 100; and a delay circuit 101 which, when the operation pipeline 100 is fed with a vector data element, receives the corresponding element address simultaneously, and outputs the element address at the same time as the output of the result of the operation after a delay time required for the operation of the input element address.

The vector operation pipeline 100 is made of one or a plurality of operation pipelines for carrying out various operations such as integer operations, floating-point operations and logic operations. The vector operation pipeline 100 operates on vector data from the register file 200 and writes the results of the operation to the register file 200, element by element in a plurality of stages on a pipeline basis. Operations on two or more vector data elements (e.g., addition of two vector data elements) are carried out in such a manner that each of the elements whose element numbers are identical is operated on independently. In accordance with the command signal 3 from the instruction decoding circuit 2, the operation pipeline 100 subjects each of either one or two vector data elements 208 and 209 from the register file 200 to the operation designated by the instruction code. Upon elapse of the number of pipeline stages determined by the operation in question, the operation pipeline 100 outputs the result 103 of the operation with respect to each vector data element.

In keeping with the command signal 3 from the instruction decoding circuit 2, the read synchronization circuit 120 reads vector data in units of elements from the register(s) in the register file 200 which is designated by an operand, and supplies the retrieved data to the operation pipeline 100. If a single register is designated by the operand as subject to the operation, the read synchronization circuit 120 selects one written data element at a time from the register by referencing the write complete flag values 224, and transmits the read request command and address 124 of the element in question to the read port 204 of the register facility 20. The selecting and transmitting actions are repeated until all data elements have been retrieved. If two registers are designated by the operand as subject to the operation, the read synchronization circuit 120 selects one pair of written data elements at a time from the two registers by referencing the write complete flag values 224 and 225, and transmits the register read command/element number 124 of the elements in question to the read ports 204 and 205 of the register facility 20. The selecting and transmitting actions are also repeated until all data elements have been retrieved. On receiving the register read command/element number 124 from the read synchronization circuit 120, the read ports 204 and 205 read data elements 208 and 209 designated by the element number 124 form inside the registers specified by the instruction decoding circuit 2, and feed the retrieved data to the operation pipeline 100. In this manner, the elements having the same element number of the vector data subject to the operation are placed altogether into the register file. When found ready to be operated on, these data elements are fed successively to the operation pipeline 100 regardless of the sequence of their element numbers.

The delay circuit 101 receives the element number 124 sent by the read synchronization circuit 120 to the read ports 204 and 205 (i.e., element number of the data element fed to the operation pipeline 100), as well as the element address made of the register number of an operation result accommodating destination register (not shown) designated by the instruction decoding circuit 2. Upon elapse of a delay time equivalent to what it takes to perform the operation, the delay circuit 101 outputs the element number together with a register write command (102). That is, the operation pipeline 100 outputs the operation result 103 while the delay circuit 101 outputs the register write command 102 and the element address designating the destination address to which to place the operation result. Alternatively, the delay time taken by the delay circuit 101 in outputting the element address 102 may be made shorter than the operation time by as much as a predetermined period, so that the register write command/element address 102 may be output earlier than the operation result. This arrangement has the advantage of shortening the time required to write the operation result to the register file 200.

The register facility 20 and operation unit 10 above have either one or two vector elements fed at a time to the operation pipeline. Alternatively, a variation of this embodiment permits execution of vector operations on three or more vector data elements, such as a product-sum operation that involves obtaining the product of two vector data elements and adding the product to a third vector data element concurrently. To implement such a variation of the invention requires adding more report ports to the register file 200 and increasing the number of write complete flag values output from the flag reference circuit 222 to the read synchronization circuit 120. In that alternative setup, the read synchronization circuit 120 may reference the write complete flag values of three or more vector registers subject to the operation in question, and may output a register read command/element number 124 to three or more read ports of the register file 200, thereby causing three or more vector data elements to be fed at a time to the vector operation pipeline 100.

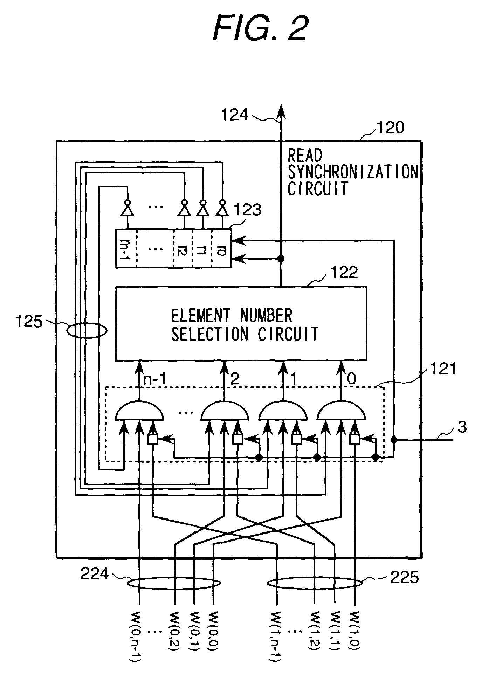

Fig. 2 is a detailed circuit diagram of the read synchronization circuit 120 according to the invention. The read synchronization circuit 120 comprises: an AND circuit 121 that determines whether each data element has been written to an element field in the register subject to the operation and whether each data element has yet to be read out: an element number selection circuit 122 for selectively outputting one of the element numbers that have been written and have yet to be read out; and read complete flags 123 each indicating that the corresponding data element is read from the register and supplied to the operation pipeline 100.

The AND circuit 121 receives the command signal 3 from the instruction decoding circuit 2. If the command signal 3 is found to designate a single register subject to the operation, the AND circuit 121 computes for each element the AND of a write complete flag value 224 with a logically inverted value 125 of the read complete flag 123 and outputs the result. If the command signal 3 is found to specify two registers subject to the operation, the AND circuit 121 computes for each element the AND of the write complete flag values 224 and 225 with the logically inverted value 125 of the read complete flag 123 and outputs the result. In this manner, a logical 1 is output for each of all data elements that are given the same element number, have been written and have yet to be read out from each register subject to the operation; otherwise a logical 0 is output.

The element number selection circuit 122 receives the output of the AND circuit 121 regarding each data element. From among all elements whose output values are 1's, i.e., from among all elements that share the same element number, have been written and have yet to be read out, the element number selection circuit 122 selects the element with the smallest element number and outputs the register read command/element number 124 of the element in question.

In accordance with the command signal 3 from the instruction decoding circuit 2, the read complete flags 123 reset as many flags as the number of elements designated by the instruction as subject to a vector operation starting from element number 0 prior to the start of the operation; the remaining flags are set. Every time the element number selection circuit 122 outputs a register read command/element number 124, the read complete flags 123 set the flag corresponding to the element number in question. Each element whose reading has been completed is removed from the candidates for selection by the element number selection circuit 122. When all elements subject to the operation have been read out and all read complete flags 123 have been set, the element number selection circuit 122 stops outputting the read request command and element number 124. The time at which all read complete flags 123 have been set corresponds to the time at which all vector data in the vector registers subject to the operation have been fed to the operation pipeline 100. Then the registers in question are freed, and the vector operation is terminated upon elapse of the time period required by the operation since the time at which the registers are freed. In this respect, the read synchronization circuit 120 may alternatively notify the instruction decoding circuit 2 or scalar processing part 6 of the completion of the vector operation instruction at the time when all read complete flags 123 have been set or upon elapse of the operation time since that time.

As described, read synchronization circuit 120 works in such a manner that when data elements have been written to the registers subject to the operation and when the write complete flags corresponding to all elements sharing the same element number have been set, these elements are immediately supplied to the operation pipeline 100. This means that when the elements sharing the same element number of the vector data subject to the operation are all set to the register file and are found ready to be operated on, these data elements are fed successively to the operation pipeline 100 regardless of the sequence of their element numbers.

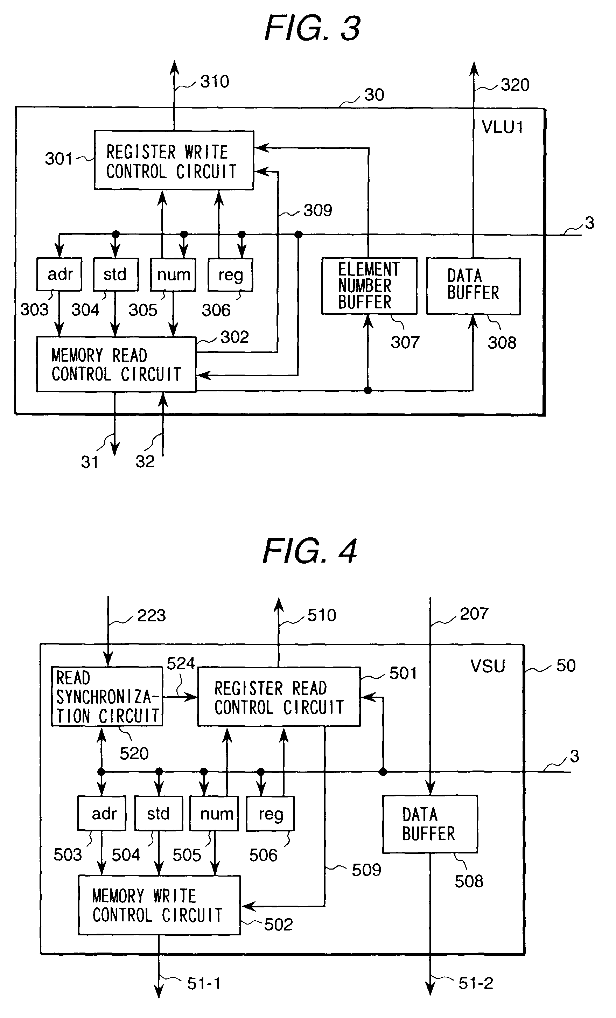

Fig. 3 is a detailed block diagram of the vector loading unit VLU1 (30) according to the invention. The vector loading unit VLU2 (40) has the same structure.

The vector loading unit VLU1 (30) comprises: a memory address buffer (adr) 303 for holding the starting address of a load source memory; a stride value buffer (std) 304 for accommodating a stride value; an element count buffer (num) 305 for retaining the number of elements; a register number buffer (reg) 306 for storing the register number of a load destination vector register; a memory read control circuit 302 for controlling a data read operation on memory; a register write control circuit 301 for controlling a data write operation on registers; a data buffer 308 for temporarily accommodating data read from memory; and an element number buffer 307 for temporarily retaining the element number of a load destination element for the data in question.

The vector loading unit VLU1 (30) executes a vector load instruction in accordance with the command signal 3 from the instruction decoding circuit 2. As designated by the command signal 3, the vector loading unit VLU1 (30) sets to the memory address buffer 303 the starting address in memory at which the vector data to be loaded are held, and writes the designated stride value, element count and load destination register number to the stride value buffer 304, element count buffer 305 and register number buffer 306 respectively, before starting the memory read control circuit 302.

The memory read control circuit 302 reads vector from memory in units of elements. In operation, the memory read control circuit 302 first outputs a memory read command 31 designating the starting address of vector data as the read address, then outputs a memory read command 31 in which the sum of the read address and the value in the stride value buffer 304 is designated as the read address, and further outputs a memory read command 31 in which the sum of the read address and the value of the stride value buffer 304 is designated as the read address. The operations above are repeated by the memory read control circuit 302 as many times as the value set in the element count buffer 305 to request the reading of the applicable vector data elements from the memory. In addition, the memory read control circuit 302 supplements the memory read commands, as they are output, with serial numbers 0, 1, 2, etc., and regards the added numbers as write destination element numbers for the read data corresponding to the memory read commands. Furthermore, the memory read control circuit 302 supplements each memory read command with an identical access source number explicitly indicating that the memory read request source is the vector loading unit VLU1 (30). On receiving such a memory read command, the memory reads the data designated by the read address and supplements the retrieved data with the element number and access source number of the memory read command before returning the data to the vector loading unit VLU1 (30). The memory read control circuit 302 checks the received read data 32 for the access source number. If the checked data are found to be the read data corresponding to the memory read command issued by this memory read control circuit 302, this circuit 302 writes the data and the element number to the data buffer 308 and element number buffer 307 respectively, and transmits a data reception signal 309 to the register write control circuit 301 specifying that the read data be written to the appropriate register.

The register write control circuit 301 writes vector data read from the memory to registers in the register file 200 in units of data elements. On receiving a data reception signal 309 from the memory read control circuit 302, the register write control circuit 301 outputs a register write command 310 that contains a load destination register number indicated by the register number buffer 306 and an element number held by the element number buffer 307 as an element address. At the same time, the register write control circuit 301 outputs the data 320 placed in the data buffer 308 to the write port 201 of the register file 200.

As described, in the loading unit VLU1 (30) when vector data are to be read from the memory in units of elements, the memory read commands involved are supplemented with the applicable element numbers before being sent to the memory. Each data element retrieved from the memory is returned together with the corresponding element number to the loading unit VLU1 (30). In this manner, even if the sequence of memory read requests from the vector loading unit VLU1 (30) does not match the sequence of read data returned by the memory, the vector loading unit VLU1 (30) can write the read data returned by the memory to the correct element numbers in the registers.

Fig. 4 is a detailed block diagram of the vector storing unit VSU (50) according to the invention. The vector storing unit VSU (50) comprises: a memory address buffer (adr) 503 for holding the starting address of a store destination memory; a stride value buffer (std) 504 for accommodating a stride value; an element count buffer (num) 505 for retaining the number of elements; a register number buffer (reg) 506 for storing the register number of a store source vector register; a memory write control circuit 502 for controlling a data write operation on memory; a register read control circuit 501 for controlling a data read operation on registers; a read synchronization circuit 520; and a data buffer 508 for temporarily accommodating data read from registers.

The vector storing unit VSU (50) executes a vector store instruction in accordance with the command signal 3 from the instruction decoding circuit 2. As designated by the command signal 3, the vector storing unit VSU (50) sets to the memory address buffer 503 the starting address in memory to which to store the vector data, and writes the designated stride value, element count and store source register number to the stride value buffer 504, element count buffer 505 and register number buffer 506 respectively, before starting the memory write control circuit 502.

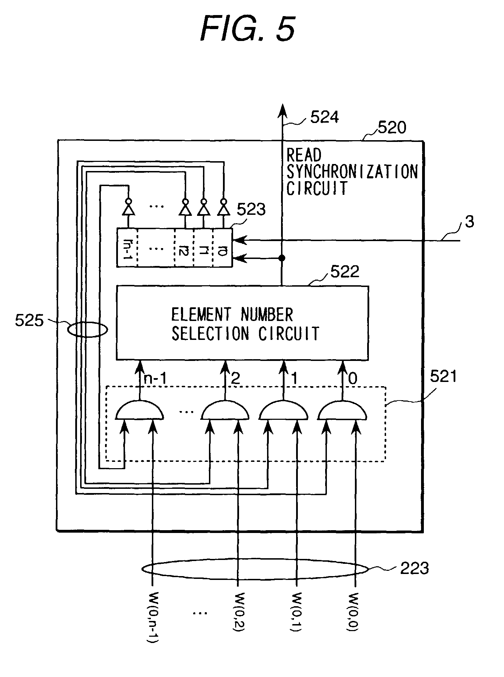

The read synchronization circuit 520 is substantially the same in structure as the read synchronization circuit 120 of the operation pipeline 100 described with reference to Fig. 2. The only difference between the two circuits is that unlike the read synchronization circuit 120, the circuit 520 refers to the write complete flags of a single register alone, as shown in Fig. 5.

Before the start of a vector store operation, the read synchronization circuit 520 resets as many flags as the number of data elements designated by the instruction as subject to the operation starting from element number 0 of read complete flags 523, and sets the remaining flags. The read synchronization circuit 520 then selects one of the elements that have been written and have yet to be read out, by getting an element number selection circuit 522 to reference the write complete flag values 223 and read complete flags 523. The selected element number 524 is output to the register read control circuit 501, and the read complete flag 523 corresponding to the element number in question is set. Each element whose reading has been completed is removed from the candidates for selection by the element number selection circuit 522. When all elements subject to the operation have been read out and all read complete flags 523 have been set, the element number selection circuit 522 stops outputting the read request command and element number 524. The time at which all read complete flags 523 have been set corresponds to the time at which all register data subject to the store operation have been fed to the vector storing unit VSU (50). Then the registers in question are freed. In this respect, the read synchronization circuit 520 may alternatively notify the instruction decoding circuit 2 or scalar processing part 6 (not shown) of the completion of execution of the vector store instruction at the time when all read complete flags 523 have been set or upon elapse of the operation time since that time.

In response to the element number 524 output by the read synchronization circuit 520, the register read control circuit 501 reads out the corresponding data element from the designated register. On receiving the element number 524 from the read synchronization circuit 520, the register read control circuit 501 outputs to the read port 203 of the register file 200 the value of the register number buffer 506, i.e., the element address formed by the number of the register subject to the store operation and by the element number 524, as well as a register read command 510. The register read control circuit 501 sets to the data buffer 508 the data returned from the read port 203, and transmits a data reception signal 509 to the memory write control circuit 502 to notify the latter of data reception.

The memory write control circuit 502 writes vector data to memory in units of data elements. On receiving a first data reception signal 509 from the register read control circuit 501, the memory write control circuit 502 outputs the value of the memory address buffer 503, i.e., a memory write command 51-1 designating the starting address of vector data as the write address, as well as data 51-2 held in the data buffer 508. Upon receipt of a second data reception signal 509, the memory write control circuit 502 outputs a memory write command 51-1 designating the write address as the sum of the write address from the preceding operation and the value of the stride value buffer 504, as well as the data 51-2 held in the data buffer 508. When receiving a third data reception signal 509, the memory write control circuit 502 outputs a memory write command 51-1 designating the write address as the sum of the write address from the preceding operation and the value of the stride value buffer 504, as well as the data 51-2 retained in the data buffer 508. The operations above are repeated as many times as the value in the element count buffer 505 to request the writing of the vector data elements to the memory. As described, when the vector storing unit VSU (50) reads vector data in units of elements from the register subject to a store operation to memory, the read synchronization circuit 520 checks the write complete flags corresponding to the elements in question. Every time a write complete flag is found to be set, the applicable element is immediately read from the register and stored into the memory. In this setup, whenever the operation pipeline 100 of the operation unit 10 writes results of operations to registers in units of data elements, these results are stored without delay into the memory regardless of the sequence of the element numbers involved.

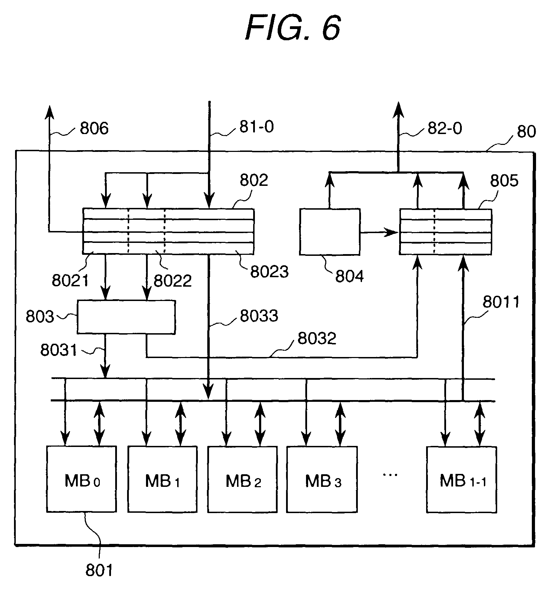

Fig. 6 is a detailed block diagram of one of memory modules (MM0, MM1, ..., MMJ-1) 80 in the memory part 8 according to the invention.

A memory module 80 comprises: an access request buffer 802 for accommodating one or a plurality of sets 81-0 of a memory read/write command, an access destination address, write data, an element number, and an access source number received from the switching part 7; an access return buffer 805 for holding one or a plurality of sets of read data, an element number, and an access source number; one or a plurality of memory banks 801; a bank control circuit 803 for controlling access to the memory banks; and a data return control circuit 804 for controlling the return of read data.

Each memory mode 80 temporarily retains in its access request buffer 802 a memory read/write command together with an access destination address 8021, an element number together with an access source number 8022, and write data 8023 received from the switching part 7, until the access in question is terminated. When the number of free fields in the access request buffer 802 has dropped below a predetermined count, the memory module 80 outputs a busy signal 806 to the switching part 7 until the free field count in the buffer exceeds the predetermined value.

Each memory bank 801 is capable of executing only one memory access operation at a time. An attempt to perform a plurality of memory access operations on a single memory bank leads to successively executing the access operations involved. On the other hand, a plurality of memory access operations may be performed simultaneously on different memory banks. From among the memory access requests held in the access request buffer 802, the bank control circuit 803 selects one that corresponds to a memory bank 801 on which a memory access operation has yet to be carried out, and sends to that bank a memory read/write command and an access destination address 8031, as well as write data 8033 if the access involved is a write operation. Selection of the memory access requests is not restricted by the sequence in which these requests were placed into the access request buffer 802. However, if there exist a plurality of memory access requests that may be selected, it is preferred to select them in the order in which they were placed into the buffer. If a memory access request calls for a read access operation, there must be free space in the access return buffer 805 before the operation can take place. Before execution of such a read access operation, one free field should be secured in the access return buffer 805. The read data 8011 read from the memory bank 801 are placed into that access return buffer 805, and the read access element number and access source number 8032 held in the access request buffer 802 are also set to the access return buffer 805.

The data return control circuit 804 adds the element number and the access source number to the read data in the access return buffer 805 before outputting the data (82-0). Basically, the data return control circuit 804 returns the read data in the order in which the data were placed into the access return buffer 805. Alternatively, the data return control circuit 804 may have a status signal line interposed between the circuit and each of return destination units, the line carrying a status signal indicating whether the return destination unit in question can receive the returned data. The data may then be returned preferentially to any unit judged ready to receive them in accordance with the signal on the status signal line.

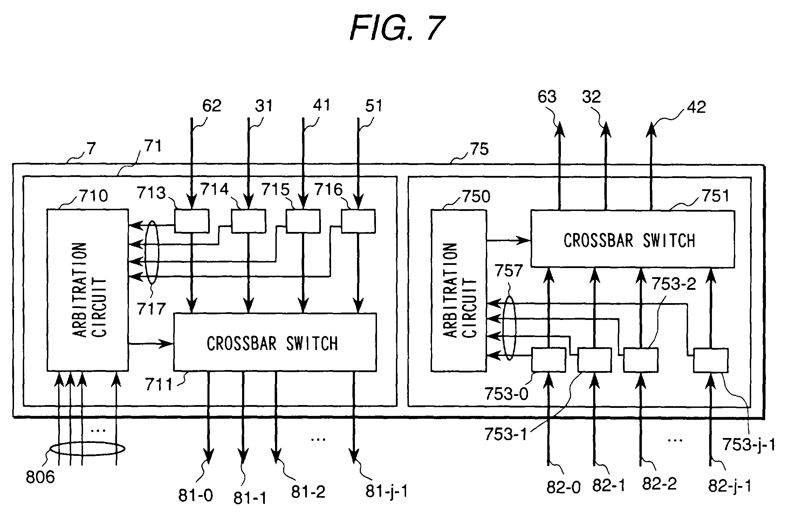

Fig. 7 is a detailed block diagram of the switching part 7 according to the invention. The switching part 7 has two major components: an access request transfer unit 71 for transferring memory access requests output by the scalar processing part 6 and vector processing part 1 to access destination memory modules 80 in the memory part 8; and a read data transfer unit 75 for transferring read data output by the memory modules 80 in the memory part 8 to the scalar processing part 6 and vector processing part 1 which are return destinations.

The access request transfer unit 71 comprises: access request butters 713, 714, 715 and 716 each accommodating one or a plurality of sets 62, 31, 41 and 51 of a memory read/write command, an access destination address, write data, an element number, and an access source number received from the scalar processing part 6 as well as the vector loading unit VLU1 (30), vector loading unit VLU2 (40) and vector storing unit VSU (50) of the vector processing part 1; a crossbar switch 711 for constituting transfer paths; and an arbitration circuit 710 for controlling the crossbar switch 711.

The crossbar switch 711 has four inputs and J outputs (J = number of memory modules in the memory part 8) which provide connections between desired inputs and outputs. The inputs and outputs of the switch are each capable of transferring all of the memory read/write command, access destination address, write data, element number, and access source number of each access request. Preferably, the number of signal lines may be reduced by having a signal line for write data double as a signal line for element numbers and access source numbers. Over the shared signal line, write data may be transmitted upon transfer of a memory write command, and an element number and an access source number may be transmitted upon transfer of a memory read command.

The arbitration circuit 710 checks the access destination addresses of access requests in the access request buffers 713, 714, 715 and 716, as well as the busy signal 806 of each memory module. If a given access request has no other contending access request for the same memory module and if that memory module is not outputting a busy signal 806, the arbitration circuit 710 immediately causes the crossbar switch 711 to form a transfer path through which the access request in question is transferred to the access destination memory module. If a given access request has any contending access request for the same memory module and if that memory module is not outputting a busy signal 806, the arbitration circuit 710 selects one of the contending access requests in accordance with predetermined arbitration conditions and causes the crossbar switch 711 to form a transfer path through which the selected access request is transferred to the access destination memory module.

The read data transfer unit 75 is structurally similar to the access request transfer unit 71. The read data transfer unit 75 comprises: access return buffers 753-0, 753-1, 753-2, ..., 753-j-1 each accommodating one or a plurality of sets 82-0, 82-1, 82-2, ..., 82-j-1 of read data, an element number, and an access source number received from the memory modules 80 in the memory part 8; a crossbar switch 751 for constituting transfer paths; and an arbitration circuit 750 for controlling the crossbar switch 751. The crossbar switch 751 has J inputs and four outputs (J = number of memory modules in the memory part 8) which provide connections between desired inputs and outputs. The inputs and outputs of the switch are each capable of transferring all of the read data, element number and access source number.

The arbitration circuit 750 checks the access source numbers of the read data in the access return buffers 753-0, 753-1, 753-2, ..., 753-j-1. If a given read data element has no other contending read data element to be returned to the same access source, the arbitration circuit 750 immediately causes the crossbar switch 751 to form a transfer path through which the read data element in question is transferred to the access source, i.e., the scalar processing part 6, or one of the vector loading units VLU1 (30) and VLU2 (40) of the vector processing part 1. If a given read data element has any contending read data element to be returned to the same access source, the arbitration circuit 750 selects one of the contending read data elements according to predetermined arbitration conditions and causes the crossbar switch 751 to form a transfer path through which the selected read data element is transferred to the access source, i.e., the scalar processing part 6, or one of the vector loading units VLU1 (30) and VLU2 (40) of the vector processing part 1.

As described, the switching part 7 allows the access request transfer unit 71 and read data transfer unit 75 independently to handle the transmission of access requests to the memory part 8 and the returning of read data from the memory part 8. There is no interference between access request transfers and read data returned. Furthermore, the access request transfer unit 71 and read data transfer unit 75 are each capable of permitting simultaneous access operations between the access sources (scalar processing part 6 as well as vector loading units VLU1 (30) and VLU2 (40) of the vector processing part 1) on the one hand and the access destinations (a plurality of memory modules in the memory part 8) on the other hand, provided that access sources and destinations are different from one another. This feature provides more efficient access to the memory than before.

If the memory part 8 and switching part 7 are formed in a single semiconductor integrated circuit, it becomes possible to read data at high speed in response to access requests from the scalar processing part 6 or vector processing part 1. Where a large number of memory modules 80 are provided, the switching part 7 and memory part 8 may preferably be formed into a single semiconductor integrated circuit instead of the memory part 8 alone being made into one semiconductor integrated circuit. This arrangement having less terminals helps reduce the scale of the circuit.

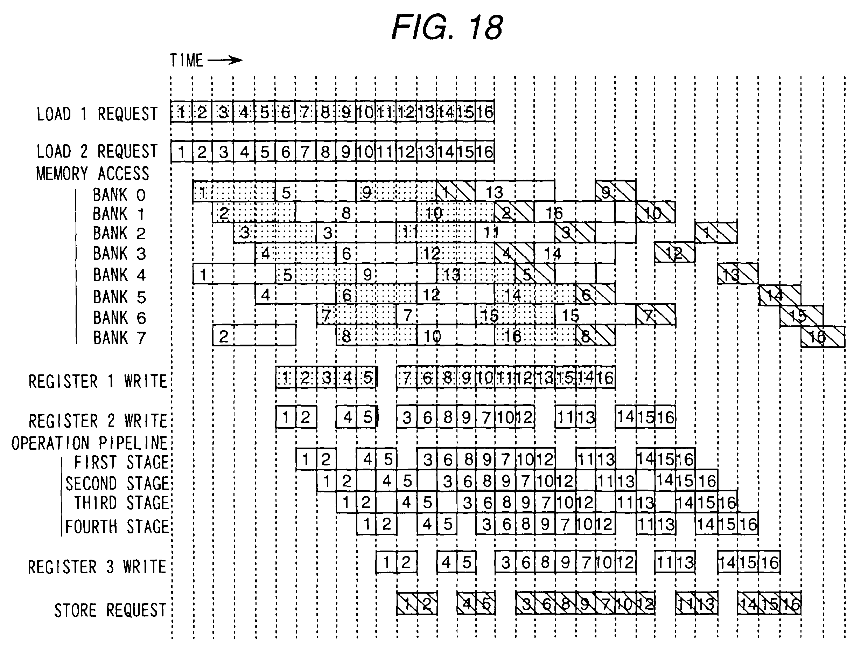

Fig. 18 is a timing chart of vector processing performed by a data processing system embodying the invention.

The vector processing illustrated in Fig. 18 involves first getting the vector loading units VLU1 (30) and VLU2 (40) to load vector data A and B made of 16 elements each from the memory part 8, causing the operation unit 10 to operate on the two sets of vector data, and finally ordering the vector storing unit VSU (50) to store the results of the operation into the memory part 8. It is assumed for the timing chart of Fig. 18 that a vector processing system of a second structure is used. For purpose of simplification and illustration, it is assumed that pipeline stages for vector computations are given in units of four cycles, that eight memory modules are included in the memory part 8, that there is one bank for each memory module for a total of eight banks in the memory part 8, and that it takes four unit cycles to access each bank.

Given their respective vector load instructions, the vector loading units VLU1 (30) and VLU2 (40) output simultaneously to the memory part 8 data read request commands for elements 1 through 16 in each unit cycle in the order of the element numbers involved. Suppose that the elements of vector data to be loaded by the vector loading unit VLU1 (30) are held in every second bank starting from bank 0 in the memory part 8, and that the elements of vector data to be loaded by the vector loading unit VLU2 (40) are held in every fourth bank starting from bank 4 in the memory part 8. In such a case, access contention is bound to occur in several banks subject to the data read operations by the two vector loading units. Illustratively, an attempt to read element 3 of vector data A from bank 2 conflicts with an attempt to read element 3 of vector data B from the same bank, causing a delay of four unit cycles in the reading of element 3 of vector data B. Similarly, an attempt to read element 6 of vector data A conflicts with an attempt to read element 4 of vector data B, causing a delay of two unit cycles in the reading of element 6 of vector data A. These and many other cases of access contention cause delays in the loading of several data elements. With this embodiment, however, the vector loading units VLU1 (30) and VLU2 (40) add an access source number designating the destination to which to return the read data as well as an element number to each data read request command before outputting the command to the memory modules in the memory part 8. In turn, each memory module supplements the read data with the access source number and element number before returning the data to the vector loading units VLU1 (30) and VLU2 (40). The scheme allows earlier elements delayed due to access contention to be overtaken by subsequent elements so that the latter will be loaded earlier. In the above example, element 3 of vector data B is overtaken by elements 4 and 5 in a load operation, and element 6 of vector data A overtaken by element 7 in another load operation. That is, vector data are loaded efficiently without being constrained by the order of their element numbers.

The vector loading units VLU1 (30) and VLU2 (40) were described above as loading to registers the elements of vector data A and B in a sequence different from that of the element numbers involved. Likewise, the operation unit 10 will execute vector operations upon completion of the loading of each data element, i.e., in a sequence different from that of the element numbers. Every time elements of vector data A and B are written to registers, the corresponding write complete flags are set. By referring to these flags using the read synchronization circuit 120, the operation unit 10 supplies the operation pipeline 100 with the elements having the same element number in the two sets of vector data immediately after the elements have been written to the registers. At the same time, the operation unit 10 inputs the data elements to the delay circuit 101. The operation unit 10 writes the results of the operation output by the operation pipeline 100 to the register element numbers output by the delay circuit 101 upon elapse of a predetermined time period. In the above example, elements 4 of both sets of vector data, loaded earlier than elements 3 of the two vector data sets in unit cycle 8, are fed to the operation pipeline 100 in the next unit cycle 9; elements 3 of both sets of vector data, subsequently loaded in unit cycle 11, are supplied to the operation pipeline 100 in the next unit cycle 12; and so on. In this manner, the vector data elements loaded to the registers by the vector loading units VLU1 (30) and VLU2 (40) in a sequence different from that of the element numbers involved are efficiently operated on, free of the constraints of the element number sequence.

As described, the vector loading units VLU1 (30) and VLU2 (40) load the elements of vector data A and B into the registers efficiently in a sequence different from that of the element numbers, and the operation unit 10 also carries out operations on the elements of both sets of vector data in a sequence different from that of the element numbers. In like manner, every time an operation on a given element is completed, the vector storing unit VSU (50) stores the result of the operation to the memory part 8. That is, the results of operations on the vector data elements are stored in a sequence different from that of the element numbers. Each time results of operations on two elements of both sets of vector data are written to registers, the corresponding write complete flags are set. By referring to these flags using the read synchronization circuit 520, the vector storing unit VSU (50) stores the results of operations on given elements into the memory part 8 immediately after the results have been written to the registers. In this manner, the results of operations output by the operation pipeline 100 in an order different form that of the element numbers involved are efficiently stored into the memory part free of the constraints of the element number sequence.

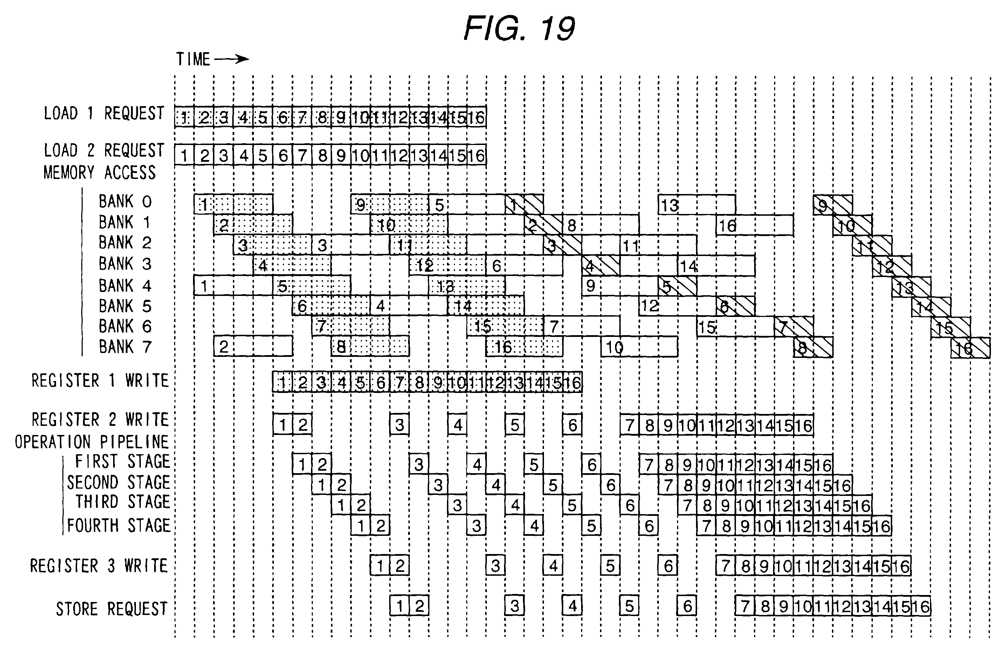

As described, the loading, operation and storing of vector data are performed not only in a chained fashion on each of vector data elements but also in a sequence different from that of the element numbers involved. This makes it possible to perform a series of vector processes efficiently regardless of access contention in the memory part 8. For purpose of comparison with the timing chart of Fig. 18, Fig. 19 shows a timing chart of vector processing carried out by a conventional system with comparable settings. The conventional system carries out the loading, operation and storing of vector data in the order of the numbers of elements constituting the vector data. Comparing the two timing charts indicates that the vector processing by the conventional system in Fig. 19 has a process stop time of 12 unit cycles due to memory access contention, while the processing by the inventive system in Fig. 18 is subject to a reduced stop time of four unit cycles.

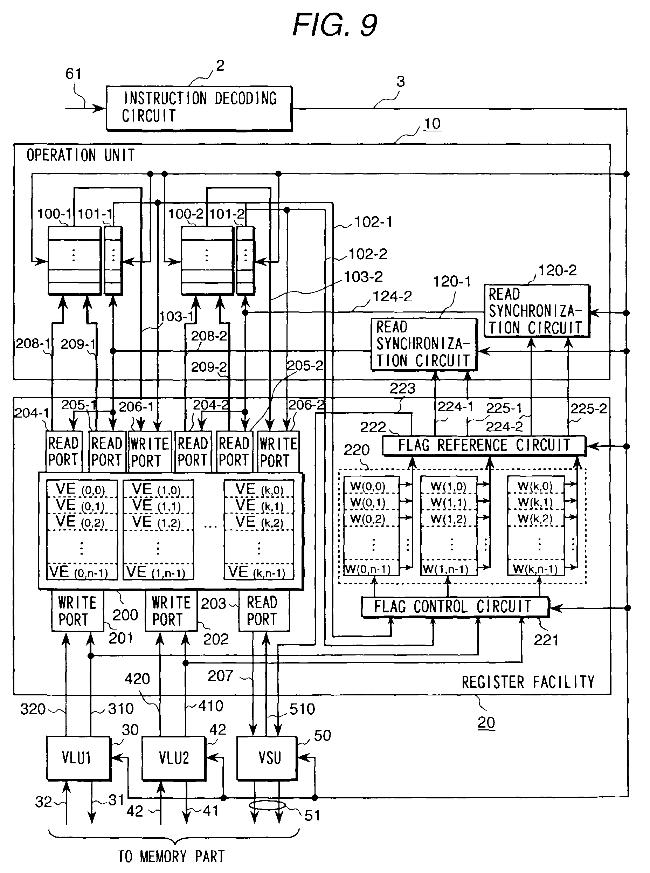

Fig. 9 is a detailed block diagram of the register facility 20 and operation unit 10 in the second structure according to the invention.

The register facility 20 and operation unit 10 in Fig. 9 are basically the same in structure as their counterparts in Fig. 1. What makes the components in Fig. 9 distinct is that the operation unit 10 has two operation pipelines 100-1 and 100-2 associated respectively with delay circuits 101-1 and 101-2 and with read synchronization circuits 120-1 and 120-2, and that the register file 200 of the register facility 20 has read ports 204-1 and 205-1 and a write port 206-1 connected to the operation pipeline 100-1, as well as read ports 204-2 and 205-2 and a write port 206-2 linked to the operation pipeline 100-2. Because the operation units 10-1 and 10-2 of the structure in Fig. 9 are capable of performing vector operations independently of each other, two vector operation instructions can be executed simultaneously. Furthermore, it is possible to perform a given vector operation followed immediately by another vector operation that is carried out on the result of the preceding operation in a chained, parallel fashion. Although this structure has two vector operation pipelines in the operation unit 10, this is not limitative of the invention. Alternatively, three or more vector operation pipelines may be provided so as to execute three or more vector operation instructions simultaneously.

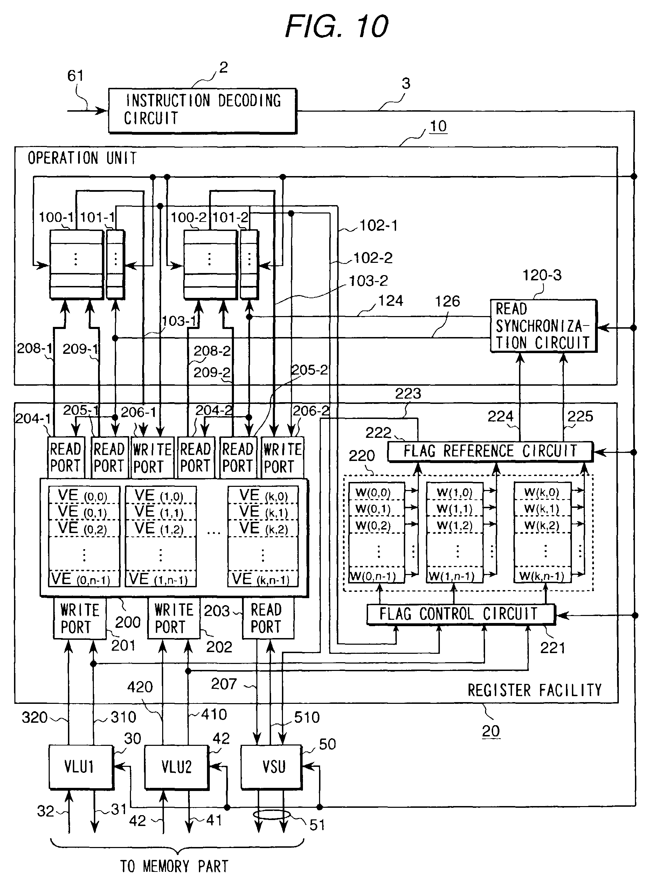

Fig. 10 is a detailed block diagram of the register facility 20 and operation unit 10 in the third structure according to the invention.

The register facility 20 and operation unit 10 in Fig. 10 are basically the same in structure as their counterparts in Fig. 1. What makes the components in Fig. 10 distinct is that the operation unit 10 has two operation pipelines 100-1 and 100-2 associated respectively with delay circuits 101-1 and 101-2, as well as a read synchronization circuits 120-3 for controlling the supply of data to the two operation pipelines, and that the register file 200 of the register facility 20 has read ports 204-1 and 205-1 and a write port 206-1 connected to the operation pipeline 100-1, as well as read ports 204-2 and 205-2 and a write port 206-2 linked to the operation pipeline 100-2. The operation units 10-1 and 10-2 are capable of executing the same vector operation, and the read synchronization circuit 120-3 distributes elements of vector data subject to a given operation to the two operation pipelines. This scheme allows the operation unit 10 of Fig. 10 to process two data elements in a single unit time whereas the vector operation unit 10 in Fig. 1 processes one element in the same unit time. That is, the operation unit 10 of Fig. 10 can reduce the execution time of vector operation instructions by half. Although this structure has two vector operation pipelines in the operation unit 10, this is not limitative of the invention. Alternatively, three or more vector operation pipelines may be provided to further reduce the execution times of vector operation instructions.

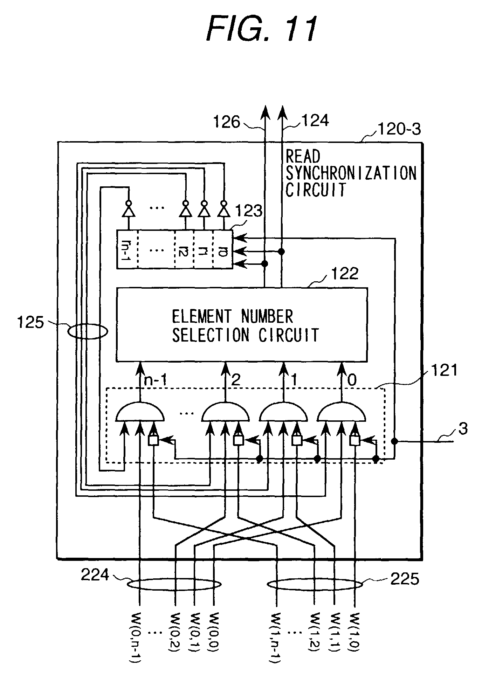

Fig. 11 is a block diagram of the read synchronization circuit 120-3 in the vector operation unit 10 of Fig. 10.

The read synchronization circuit 120-3 is basically the same in structure as the read synchronization circuit 120 described in reference to Fig. 2. The difference is that the read synchronization circuit 120-3 causes an element number selection circuit 122-3 to output register read commands and element numbers 124 with respect to two data elements. The element number selection circuit 122-3 receives outputs by elements of the AND circuit 121. If there is an element whose output value is 1, i.e., if all elements sharing the same element number have been written and if among them is an element whose reading has yet to be completed, then the element number selection circuit 122-3 outputs the element number 124 of that element together with a register read command. If there are two or more elements whose output value is 1 each, the element number selection circuit 122-3 selects the element with the smallest element number and another element with the second-smallest element number, and outputs these element numbers 124 and 126 together with a register read command each. This scheme makes it possible to supply operation-ready vector data elements simultaneously to the vector operation pipelines 100-1 and 100-2 in Fig. 10 when the two operation pipelines execute a single vector operation instruction.

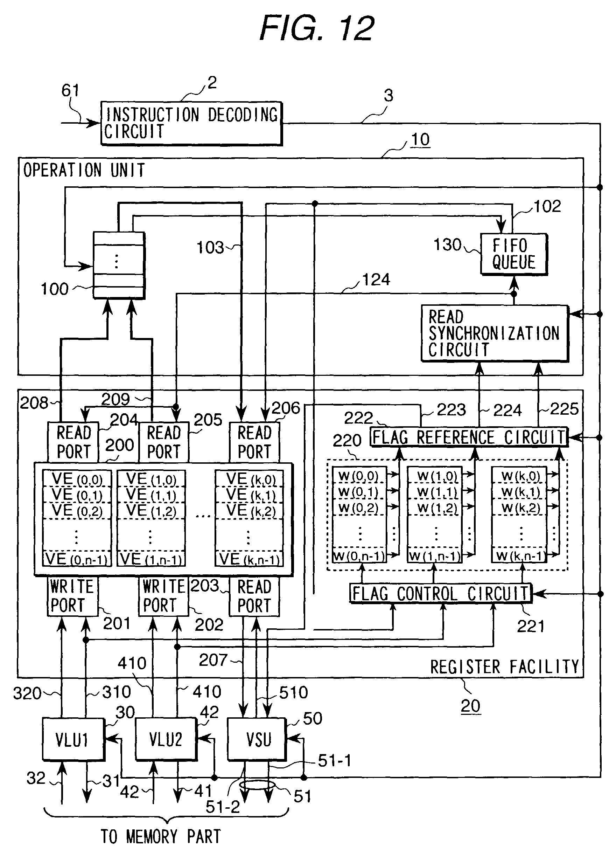

Fig. 12 is a detailed block diagram of the operation unit 10 in the fourth structure according to the invention.

The operation unit 10 of Fig. 12 is basically the same in structure as its counterpart in Fig. 1. The difference is that the operation unit 10 of Fig. 12 utilizes an FIFO queue 130 instead of the delay circuit 101. The FIFO queue 130 stores successively the element numbers 124 of data elements which are output by the read synchronization circuit 120 and fed to the operation pipeline 100. The queue 130 outputs the element numbers in the order in which they were stored, in keeping with the results of operations output by the operation pipeline 100. In this manner, the FIFO queue 130 can output the element numbers corresponding to the operation results regardless of the time required for vector operations. While this structure substitutes the FIFO queue for the delay circuit 101 in the operation unit 10 of Fig. 1, the delay circuit of the operation unit 10 in Fig. 9 or 10 may also be replaced by an FIFO queue each. The replacement also provides similar advantageous effects.

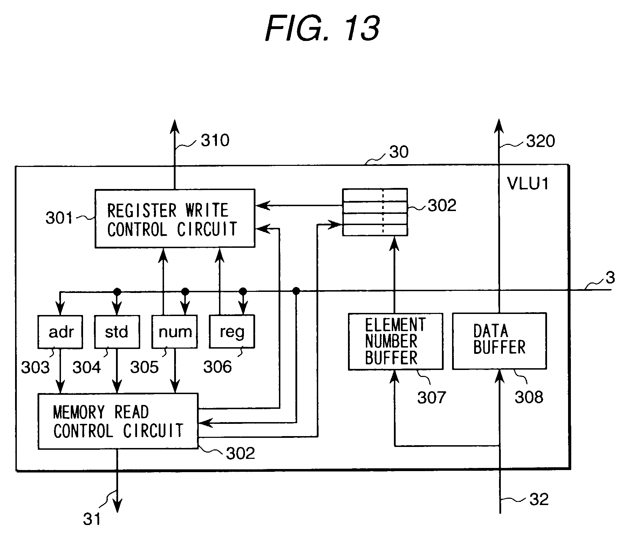

Fig. 13 is a block diagram of the vector loading unit (VLU) 30 in the second structure according to the invention.

The vector loading unit (VLU) 30 of Fig. 13 is basically the same in structure as its counterpart in Fig. 3. The difference is that the vector loading unit 30 of Fig. 13 has an additional element address buffer 330 for temporarily accommodating element addresses of the register file 200, each address indicating a load destination to which to write data retrieved from memory. A plurality of element addresses may be placed into the element address buffer 330, and the load location for each element address is identified by a unique load number. Instead of supplementing a memory read command 31 with a load destination element number for output, the memory read control circuit 302 generates an element address based on the load destination element number and on the vector register number of the load destination designated by the register number buffer 306. The memory read control circuit 302 places the element address thus generated into the element address buffer 330, and adds the load number for the element address to the memory read command 31 for output. The register write control circuit 301 retrieves that element address in the element address buffer 330 which is designated by the load number of the received read data 32, outputs a register write command 310, and sends the data 320 from the data buffer 308 to the write port 201 of the register file 200. With this structure, the moment the memory read control circuit 302 outputs the memory read command for the last element during execution of a vector load instruction, it is possible to release the memory address buffer 303, stride value buffer 304, element count buffer 305, register number buffer 306 and memory read control circuit 302 from the load instruction in question. This allows the next vector load instruction to be executed without delay. Although not shown, arrangements may be made so that the instruction decoding circuit 2 or scalar processing part 6 is notified that execution of the vector load instruction has been completed as soon as the memory read control circuit 302 has output the memory read command for the last element.

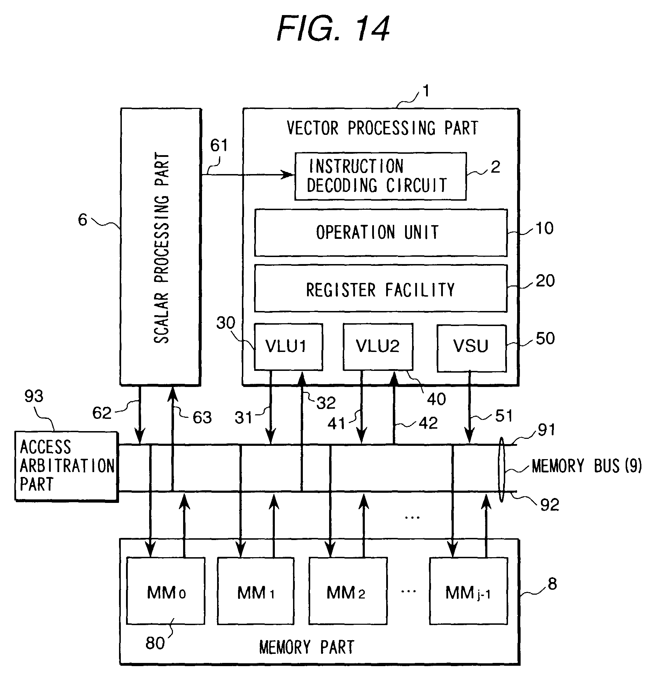

Fig. 14 is a block diagram of the data processing system in the second structure according to the invention.

The data processing system of Fig. 14 is basically the same in structure as its counterpart in Fig. 1, except that the switching part 7 is replaced by a memory bus 9 to reduce the scale of the circuit.

The memory bus 9 comprises: an access signal line 91 for sending access requests from the scalar processing part 6 and vector processing part 1 to the memory part 8; a read data return signal line 92 for returning read data from the memory part 8 to the scalar processing part 6 or vector processing part 1; and an access arbitration part 93 for arbitrating access operations to the memory bus.

The scalar processing part 6 and each of the VLU1 (30), VLU2 (40) and VSU (50) in the vector processing part 1 output access requests onto the access signal line 91 when gaining access to the memory part 8. The access arbitration part 93 selects one of these access requests in accordance with predetermined priority criteria to permit access to the memory by use of the memory bus 9 composed of a plurality of signal lines. On returning read data to the scalar processing part 6 or vector processing part 1, the memory modules 80 in the memory part 8 output return requests onto the read data return signal line 92. The access arbitration part 93 selects one of the access and return requests according to the predetermined priority criteria to permit access through the memory bus 9.

The structure above permits simultaneous execution of both the transfer of memory access requests and the returning of read data over the independently furnished access signal line 91 and read data return signal line 92, the access signal line 91 sending access requests from the scalar processing part 6 and vector processing part 1 to the memory part 8, the read data return signal line 92 returning read data from the memory part 8 to the scalar processing part 6 or vector processing part 1. If memory access performance permits, the access signal line 91 and read data return signal line 92 may be formed into a common line for a further reduction in the scale of the circuit.

The scalar processing part 6, vector processing part 1, access arbitration part 93, and memory part 8 may each be built in a separate semiconductor integrated circuit. Alternatively, these components may be integrated into a single semiconductor integrated circuit to eliminate drivers and other parts needed to output data. The alternative structure will make up a high-speed data processing system on a limited circuit scale.

The scalar processing part 6 and vector processing part 1 may be formed in a single semiconductor integrated circuit; or the scalar processing part 6, vector processing part 1 and access arbitration part 93 may be integrated into a single semiconductor integrated circuit. Either of these structures makes it possible to vary the capacity of the memory part 8 as desired and thereby contributes to enhancing the general versatility of the system.

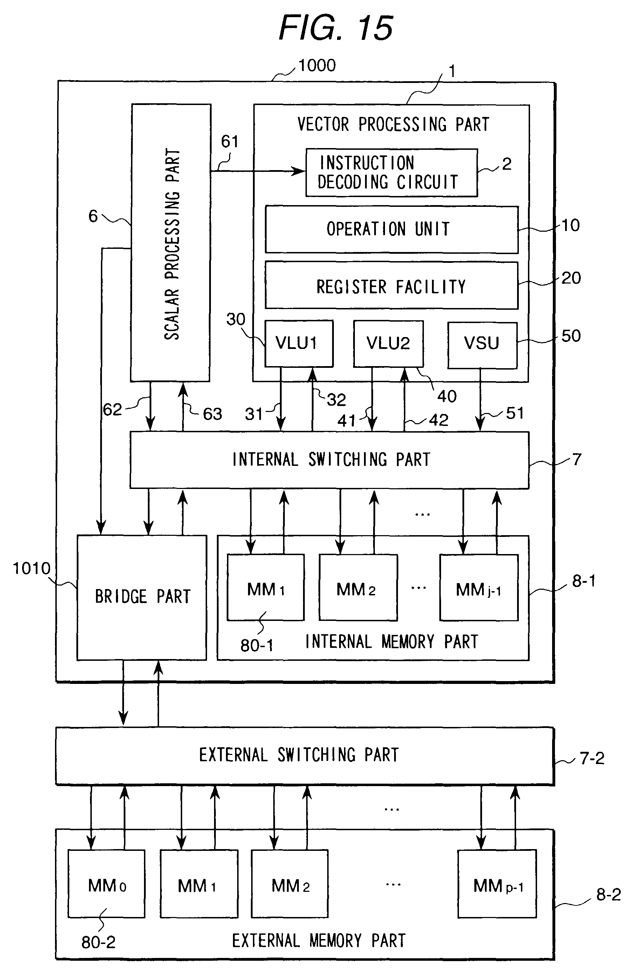

Fig. 15 is a block diagram of a data processing system in the third structure according to the invention.

This data processing system is formed by having the memory part 8 of the vector processing system in Fig. 1 made of a hierarchical structure including an internal memory part 8-1 and an external memory part 8-2, and by incorporating a scalar processing part 6, a vector processing part 1 and the internal memory part 8-1 in a single semiconductor chip or module substrate 1000. The internal memory part 8-1 and external memory part 8-2 are structurally the same as the memory part 8, and a switching part 7-1 for the internal memory part and a switching part 7-2 for the external memory part have the same structure as that of the switching part 7. A bridge part 1010, connecting the internal memory switching part 7-1 with the external memory switching part 7-2, relays access requests and returned read data between scalar processing part 6 and vector processing part 1 on the one hand and the external memory part 8-2 on the other hand. This system permits access operations from the scalar processing part 6 and vector processing part 1 to the internal memory switching part 7-1 inside the chip or module. That is, although limited to part of the memory, the access operations are carried out internally and hence at high speed. Alternatively, the bridge part 1010 may be arranged to have a so-called DMA (dynamic memory access) function interposed between the internal memory part 8-1 and the external memory part 8-2. In that alternative setup, commands 64 from the scalar processing part trigger consecutive data transfers between the internal and external memory parts 8-1 and 8-2.

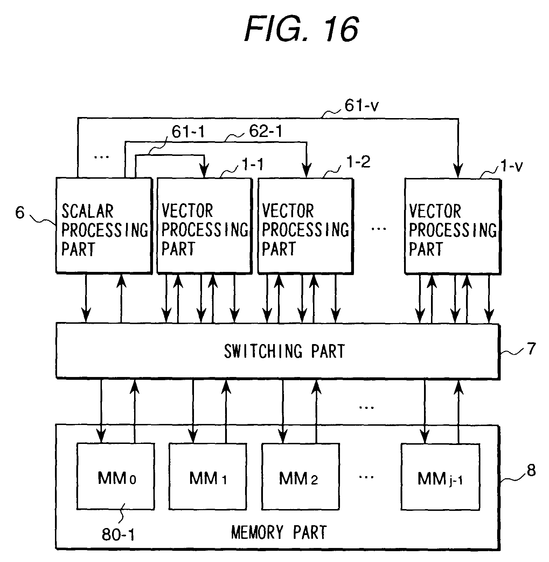

Fig. 16 is a block diagram of a data processing system in the fourth structure according to the invention.

This data processing system is basically the same in structure as its counterpart in Fig. 1 except that a plurality of vector processing parts are provided. The multiple vector processing parts 1-1, 1-2, ..., 1-v are capable of simultaneously processing a plurality of vector instructions 61-1, 61-2, ..., 61-v sent from the scalar processing part. The system of Fig. 16 thus permits vector processing at higher speed than before.

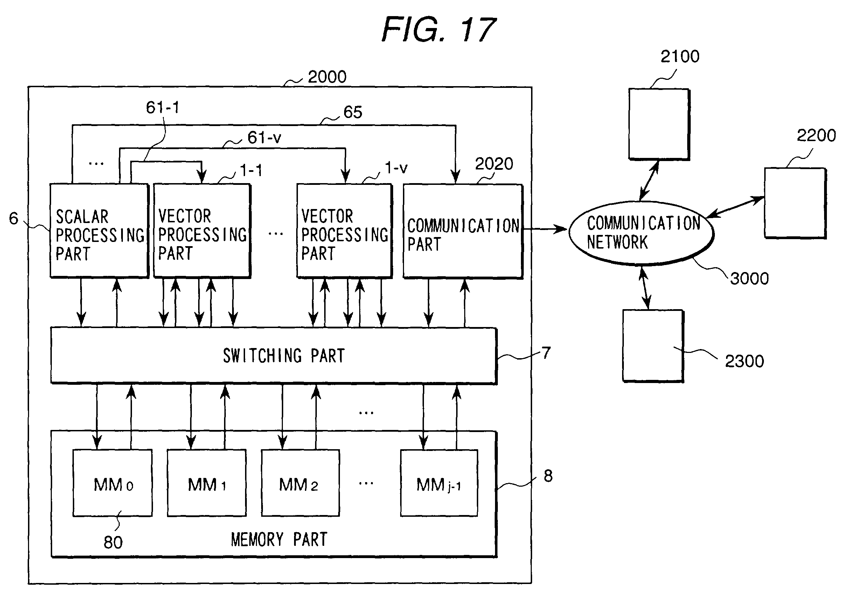

Fig. 17 is a block diagram showing a group of data processing systems according to the invention.

The group comprises a plurality of data processing systems (one indicated by 2000) whose structure was described with reference to Fig. 15, each system being supplemented with a communication part 2020 having functions for communicating with the outside. The plurality of multiple data processing systems 2000, 2100, 2200 and 2300 having the same structure are interconnected by a communication network 3000. The communication part 2020 of each data processing system reads data from the memory part 8 in accordance with a communication instruction 65 from the scalar processing part to send the read data to another data processing system, requests another data processing system to read data from its memory part in keeping with a communication instruction 65 from the scalar processing part, or reads data from the memory part 8 according to a data read request received from another data processing system to send the read data to the request source data processing system. When the multiple data processing systems cooperate to deal with the processing of data in that manner, vector processing is accomplished faster than ever before.

As described, the invention provides a data processing system which, embodied and broadly described above, is capable of processing operations at high speed.

As many apparently different embodiments of this invention may be made without departing from the spirit and scope thereof, it is to be understood that the invention is not limited to the specific embodiments thereof except as defined in the appended claims.

## Claims

1. A data processor comprising:
a register (20) having fields (200, VE(i,j)) for accommodating a plurality of data elements and regions (220, W(i,j)) each holding information indicating whether a data element has been written to the corresponding field;
an operation part (10) for operating on data in accordance with operation instructions; and
a controlling part (204, 205, 120) for reading from said register the data to be operated on and for sending the read data to said operation part in accordance with an operation instruction and with the information held in said register.

2. A data processor comprising:
an operation part (10) for operating on data in accordance with operation instructions:
a register (20) having fields (200, VE(i,j)) for accommodating a plurality of data elements and regions (220, W(i,j)) each holding information indicating whether a data element has been written to the corresponding field; and
a data outputting part (50) for reading results of operations from said register based on the information held in said register, said data outputting part further outputting the read results together with address information.

3. A data processor according to claim 1, further comprising:
a data inputting part for outputting address information for allowing data to be written to said register.

4. A data processor according to claim 3, wherein said address information is constituted by an address at which the data to be read are held and by identification information to be attached to the data to be read.

5. A data processing system comprising:
a memory (8) for storing data; and
at least one processor (1) for reading data from said memory and for processing the read data; wherein said processor outputs return destination information together with an address, and said memory outputs both the data read from said address and said return destination information.

6. A data processing system according to claim 5, wherein said return destination information is identification information assigned to the data to be processed.

7. A data processing system according to claim 5, wherein said return destination information is identification information assigned to said processor.

8. A data processing system according to claim 6, wherein said processor has a register (20) for accommodating a plurality of data elements and a processor (10) for executing the same operation on each of said plurality of data elements held in said register, and wherein the data read from said memory in accordance with said identification information are written to said register and the data written to said register are processed in keeping with said identification information.

9. A data processing system comprising:
a plurality of memories (8, 80, MMi) each storing data and outputting a signal indicating whether new address information is receivable;
at least one processor (10, 100) for outputting address information to any of said memories and for processing data read from the applicable address of any of said memories;
and
a switching part (7) which, connected interposingly between said plurality of memories and said processor, determines when to output said address information to said memories in accordance with said address information read by said processor and said signal outputted by said memory.

10. A data processing system according to claim 9, wherein said switching part includes an address information transferring part and a data transferring part, said address information transferring part transferring address information from said processor to said memories, said data transferring part transferring data from said memories to said processor.

11. A data processing system according to claim 9, wherein each of said memories includes a storing part for storing a plurality of pieces of address information sent through said switching part, and outputs a signal indicating that new address information is receivable if the address information stored in said storing part has a value less than a predetermined value, and wherein said switching part transfers to the memory the address information on said processor in accordance with said signal.

12. A data processing system comprising:
a plurality of vector processors for repeatedly executing the same operation on a plurality of data elements constituting a vector; and
a processor for selecting one of said vector processors if an instruction fed to said processor is a vector processing instruction, said processor further transferring said vector processing instruction to the selected vector processor.

13. A data processing system constituted by a plurality of interconnected data processors (1, 100) each comprising a communication part for transferring data between said data processors, a memory for storing data, and a processor for operating on data read from said memory, wherein said processor outputs return destination information about the data to be processed together with an address, and wherein said memory outputs both the data read from said address and said return destination information.

14. A data processing system according to claim 13, wherein said return destination information is unique identification information assigned to the data to be processed.

15. A data processing system according to claim 13, wherein said return destination information is unique identification information assigned to said processor.

16. A data processing system according to claim 13, wherein said processor comprises a register (20) for accommodating a plurality of data elements and a processing part for executing the same operation on each of said data elements held in said register, wherein the data read from said memory in accordance with said identification information are written to said register, and wherein the data written to the register are processed in keeping with said identification information.
